# EUROPÄISCHE PATENTANMELDUNG

(11) **EP 1 264 627 A1**
(43) Veröffentlichungstag der Anmeldung: **11.12.2002**
(21) Anmeldenummer: 01114017.5
(22) Anmeldetag: 08.06.2001
(51) Int. Cl.: B01D 33/23

(54) **Filtertuch für eine Filtrationsvorrichtung und Verfahren zur Montage eines Filtertuchs**

(71) Anmelder: Sefar AG, 8803 Rüschlikon (CH)
(72) Erfinder: Müller, Hans Rudolf, 8038 Zürich (CH); Maurer, Christoph, 8001 Zürich (CH)
(74) Vertreter: Wunderlich, Rainer, Dipl.-Ing.

(57) **Zusammenfassung**

Die Erfindung betrifft ein Filtertuch für eine Filtrationsvorrichtung mit einem Filtermedium, insbesondere einem Filtergewebe, welches zur Filtration eine Vielzahl von Öffnungen aufweist. Das Filtertuch ist erfindungsgemäß dadurch gekennzeichnet, dass auf zumindest einer Seite des Filtermediums zum Schutz vor mechanischer Beschädigung eine Schutzschicht vorgesehen ist und dass die Schutzschicht lösbar auf das Filtermedium aufgebracht ist. Die Erfindung betrifft außerdem ein Verfahren zur Montage eines Filtertuchs mit einem Filtermedium und einer darauf aufgebrachten Schutzschicht, insbesondere eines erfindungsgemäßen Filtertuchs, bei dem das Filtertuch auf eine Auflagefläche einer Filtervorrichtung aufgelegt und befestigt wird und bei dem nach dem Befestigen des Filtertuchs zur Bereitsstellung eines arbeitsfertigen Zustands die Schutzschicht zumindest teilweise von dem Filtermedium gelöst wird.

## Beschreibung

Die Erfindung betrifft ein Filtertuch für eine Filtrationsvorrichtung mit einem Filtermedium, insbesondere einem Filtergewebe, welches zur Filtration eine Vielzahl von Öffnungen aufweist.

Weiterhin betrifft die Erfindung ein Verfahren zur Montage eines Filtertuchs mit einem Filtermedium und einer darauf aufgebrachten Schutzschicht.

Filtertücher der genannten Art sind bekannt und werden beispielsweise bei der Filtration von Fest-Flüssig-Gemischen in Trommel- oder Scheibenfiltern eingesetzt.

Monofile Filtertücher im Feinstbereich mit Porenöffnungen unter 0,01 mm und hoher Durchsatzleistung sind aus feinen Monofilgarnen mit Durchmessern unter 0,1 mm hergestellt.

Verschiedene Filtermaschinen-Konstruktionen für eine Chargen- oder eine kontinuierliche Filtration mit unterschiedlichen Typen von Drehfiltern sind mit sogenannten Einstemmnuten, wie z.B. Omega-förmigen Nuten, zur Befestigung der Filtermedien versehen. Beispielsweise können Trommelfilter dieser Art mit Durchmessern von bis zu 3 m und Längen von bis zu 6 m dimensioniert sein, wobei solche Trommelfilter in Zellen oder Segmente unterteilt sind. Die einzelnen Zellen sind etwa 0,3 bis 0,6 m breit, haben die Länge der Trommel und verteilen sich gleichmäßig über deren gesamten Umfang.

Bei der Montage der Filtertücher werden die vorbereiteten Teilabschnitte oder ein vorbereitetes einzelnes Tuch entsprechend dem Gesamtoberflächenbedarf der Trommel aufgelegt. Zur Befestigung werden sogenannte Einstemmkordeln, die aus verschiedensten Materialien gefertigt sein können, oder Stäbe aus Plastik, Metall usw. zusammen mit dem Filtertuch in die Einstemmnuten eingeschlagen.

Um die Filtertücher beim Einschlagen mit dem Hammer vor Verletzungen zu schützen, werden spezielle Einschlagwerkzeuge, wie beispielsweise Holz- oder Plastikkeile verwendet. Da gleichwohl Fehlschläge mit dem Hammer und eine nicht fachgemässe Handhabung der Keile nicht vollständig zu vermeiden sind, werden für diese Anwendungen dicke, schwere Filtertücher bevorzugt. Nachteilig ist bei diesen schweren Tüchern jedoch, dass sich in den Poren oder Öffnungen nach und nach feine und feinste Partikel ablagern, die sich durch einen Tiefenfiltereffekt im Filtertuch bis zur Verstopfung ansammeln. Das Filtertuch muss dann ausgewechselt werden.

Monofile Filtergewebe und mikroporöse Membranen sind aufgrund ihrer physikalisch-mechanischen Eigenschaften, insbesondere ihrer glatten Oberflächen und definierten Porengröße, in der Regel verstopfungsfrei. Darüber hinaus weisen solche Filtermedien hervorragende Kuchenabwurfeigenschaften sowie einen Selbstreinigungseffekt auf, so dass sich keine Rückstände im Gewebe bilden. Nachteilig ist jedoch, dass leistungsfähige Monofiltücher oder Membranen mit Porenweiten von unter 0,01 mm sehr dünn, mechanisch schwach und daher sehr empfindlich sind.

Die an dem Filtermedium angreifenden Kräfte, die in diesem Zusammenhang als Reißkräfte bezeichnet werden können, sind bei sehr feinen Filtergeweben, bezogen auf deren mechanische Eigenschaften, vergleichsweise sehr groß. Außerdem können die Filtermedien bei der Befestigung an dem Filtersegment durch Schläge mit Hammer und Keil verletzt werden.

Um solche Verletzungen des Filtermediums zu vermeiden, wird in der DE 44 32 004 C2 vorgeschlagen, die Filtertücher auf den Filterelementen mit Hilfe von gegenseitig verspannbaren Formteilen zu befestigen. Diese Formteile sind dabei als Paar von einander zugeordneten Profilleisten ausgebildet, welche jeweils Reihen von Nadeln bzw. damit korrespondierende Reihen von Löchern aufweisen. Da jedoch bei dieser Art der Befestigung das Filtermedium durchstochen und somit mechanisch geschwächt wird, besteht die Gefahr eines Einreißens in der Umgebung der Nadeln der Befestigungsleisten.

Da bei den Filtersegmenten die Einstemmnuten im Allgemeinen vorgegeben, d.h. insbesondere auf ein vergleichsweise dickes Filtertuch angepasst sind, ergeben sich bei Einsatz von dünnen und feinen Filtergeweben entsprechend schlechtere Dichtungseigenschaften. Dies trifft auch für die in der DE 44 32 004 C2 beschriebene Alternativlösung zu.

Schließlich sind die Auflageflächen für die Filtermedien auf den Filtersegmenten häufig rauh und grob, so dass die Feinstgewebe und Membranen während der Montage oder auch durch mechanische Beanspruchung im Betrieb durch diese Auflageflächen beschädigt werden können.

Die dünnen, feinen und leichten Filtermedien sind in den geforderten großen Abmessungen somit schwer zu handhaben, für eine stabile Montage auf den großen Filtermaschinen nicht gut geeignet und halten den Belastungen im Betrieb nicht gut stand.

**Aufgabe** der Erfindung ist es, ein Filtertuch für eine Filtrationsvorrichtung sowie ein Verfahren zur Montage eines Filtertuchs anzugeben, bei welchen mechanische Beschädigungen des Filtermediums bei der Montage und/oder im Betrieb der Filtrationsvorrichtung weitgehend vermieden werden können. Das Filtertuch soll außerdem leicht handhabbar und das Verfahren unaufwendig durchführbar sein.

Diese Aufgabe wird durch das Filtertuch mit den Merkmalen des Patentanspruches 1 sowie durch das Verfahren mit den Merkmalen des Patentanspruches 11 gelöst.

Vorteilhafte Ausführungsformen des Filtertuchs und bevorzugte Weiterbildungen des Verfahrens sind in den abhängigen Ansprüchen angegeben.

Das Filtertuch der oben angegebenen Art ist erfindungsgemäß dadurch weitergebildet, dass auf zumindest einer Seite des Filtermediums zum Schutz vor mechanischer Beschädigung eine Schutzschicht vorgesehen ist und dass die Schutzschicht lösbar auf das Filtermedium aufgebracht ist.

Es ist ein Kerngedanke der Erfindung, dass bei einem Filtertuch ein Sandwich-Aufbau mit einer ein- oder beidseitig auf dem Filtermedium lösbar aufgebrachten Schutzschicht, die auch als Schutzabdeckung bezeichnet werden kann, vorgesehen ist. Die Schutzschicht kann nur bereichsweise an besonders kritischen Stellen, wie etwa dem Rand, oder vorzugsweise über die gesamte Fläche ausgebildet sein.

Ein wesentlicher Vorteil des erfindungsgemäßen Filtertuchs kann darin gesehen werden, dass durch Aufbringen einer Schutzschicht, also mit einer unaufwendigen und kostengünstigen Maßnahme, bereits eine deutliche Verbesserung der mechanischen Stabilität und ein hervorragender Schutz des Filtermediums vor mechanischer Beschädigung bei Transport, Lagerung, Montage oder in einem eingebauten Betriebszustand des Filtertuchs ermöglicht wird.

Die Erfindung kann besonders nutzbringend bei feinen Filtergeweben eingesetzt werden. Die Schutzschicht kann aber auch auf anderen Filtermedien vorgesehen sein, etwa porösen Membranen, Membrantüchern, Vliesen etc.

Bei einer bevorzugten Weiterbildung ist die Schutzschicht als eine Folie ausgebildet, welche auf das Filtermedium aufgelegt und mit diesem verbunden ist. Die Folie kann insbesondere aus Synthetik- oder Naturmaterialien gefertigt sein, es kann sich insbesondere um ein papierartiges Produkt, ein Faservlies-Produkt, eine Metallfolie, einen Schaumstoff, einen Gummi-/Kunstoff oder um eine Kombination oder ein Laminat dieser Materialien handeln. Die jeweiligen Eigenschaften und Vorteile der genannten Werkstoffe können gezielt eingesetzt und hochentwickelte Technologien der Folienherstellung und -verarbeitung können in vorteilhafter Weise nutzbar gemacht werden.

Damit die Filtrationseigenschaften des Filtermediums durch die Schutzschicht im Wesentlichen unbeeinträchtigt bleiben, ist es zweckmäßig, dass die Schutzschicht rückstandsfrei von dem Filtermedium abnehmbar, insbesondere abziehbar, ist.

Die Schutzschicht kann beispielsweise mittels einer Klebebeschichtung auf das Filtermedium aufgebracht sein, wobei insbesondere Klebebeschichtungen bevorzugt sind, bei denen beim Abziehen keine Kleberanteile auf dem Filtermedium haften bleiben oder in die Filterporen eindringen. Zweckmäßig können außerdem Selbstklebebeschichtungen sein, die zumindest einige Male ein Entfernen oder ein Abziehen und ein anschließendes Wiederaufbringen der Schutzschicht ermöglichen. Solche Klebebeschichtungen oder Klebefolien sind aus der Papierverarbeitung bekannt und können hier vorteilhaft eingesetzt werden.

Es kann aber auch ein Aufbau gewählt werden, bei dem die Schutzschicht aufgrund von elektrostatischen und/oder von Adhäsionskräften an dem Filtermedium haftet. Dies hat neben der Einsparung einer Klebebeschichtung weiterhin den Vorteil, dass eine Beeinträchtigung der Filtrationseigenschaften des Filtermediums sicher verhindert und dass die Schutzschicht zur Bereitstellung eines arbeitsfertigen Zustands besonders leicht entfernbar ist.

Schließlich ist es auch möglich, auf das Filtermedium einen Schutzlack aufzusprühen, wobei der ausgehärtete Lack dann die Schutzschicht oder Schutzabdeckung bildet und vor Inbetriebnahme des Filtertuchs abgezogen werden kann.

Im Hinblick auf typische mechanische Beanspruchungen bei der Montage eines Filtertuchs in einer Filtrationsvorrichtung, d.h. beispielsweise beim Einschlagen von Einstemmkordeln, ist weiterhin bevorzugt, dass die Schutzschicht aus einem Material hoher Schlagfestigkeit ausgebildet ist. Unter dem Begriff Schlagfestigkeit soll in diesem Zusammenhang auch die Schlagzähigkeit oder Kerbschlagzähigkeit verstanden werden.

Bei einer weiteren Ausgestaltung der Erfindung weist die Schutzabdeckung eine richtungsveränderliche Festigkeit auf.

Hierdurch kann insbesondere das definierte Ablösen oder Abziehen der Schutzschicht vor Inbetriebnahme des Filtertuchs wesentlich erleichtert werden.

Insbesondere ist in diesem Zusammenhang eine Ausgestaltung des Filtertuchs zweckmäßig, bei der die Schutzschicht in einer Längsrichtung eine hohe Festigkeit aufweist und in einer Querrichtung, insbesondere an einer Mehrzahl von ausgewählten Stellen, eine reduzierte Festigkeit, insbesondere Perforationen, aufweist. Bevorzugt sind solche Perforationen entlang der Befestigungseinrichtungen, beispielsweise der Einstemmnuten und Einstemmkordeln vorgesehen.

Die Schutzschicht kann beim Abnehmen oder Abziehen entlang der Perforationen besonders leicht und definiert abgerissen werden, wobei beispielsweise zwischen Einstemmkordel und Einstemmnut die Schutzschicht auf dem Filtermedium verbleiben kann. Hierdurch wird außerdem eine Verbesserung der dichtenden Eigenschaften des Filtertuchs erzielt.

Um dem Feinstfiltergewebe und den Membranen mechanische Stabilität und gute Griffeigenschaften zu verleihen, kann auf einer Rückseite des Filtermediums eine Verstärkungsschicht aufgebracht sein. Insbesondere kann ein geeignetes Vlies oder können andere Textilien auf dem Filtermedium aufkaschiert sein, wobei ein geeignetes Material gemäß den mechanischen, geometrischen und chemischen Anforderungen der Filtrationsvorrichtung und des jeweiligen Prozesses ausgewählt wird.

Zweckmäßigerweise ist vor allem in den Auflagebereichen des Filtertuchs zur Verstärkung und zur Verbesserung der dichtenden Eigenschaften eine solche Verstärkungsschicht vorgesehen.

Beispielsweise kann als Verstärkungsschicht ein meltblown-Vlies, insbesondere aus einem synthetischen Polymer, auf das Filtermedium aufgebracht werden. Bevorzugt ist insbesondere eine Kombination von Vlies und Kaschierklebermaterial, bei der die Durchlasskapazität des Filtermediums um weniger als 5% reduziert wird.

Für die Schutzschicht und/oder eine eventuell vorgesehene Verstärkungsschicht kann auch ein Material vorgesehen sein, das quellende Eigenschaften hat. Im Betrieb, beispielsweise bei Fest-Flüssig-Filtration, quillt ein solches Medium dann auf und verbessert dadurch zusätzlich die Abdichtung der Filtersegmente.

Das erfindungsgemäße Verfahren, welches sich insbesondere zur Montage eines erfindungsgemäßen Filtertuchs eignet, ist dadurch gekennzeichnet, dass das Filtertuch auf eine Auflagefläche einer Filtrationsvorrichtung aufgelegt und befestigt wird und dass nach dem Befestigen des Filtertuchs zur Bereitstellung eines arbeitsfertigen Zustands die Schutzschicht zumindest teilweise von dem Filtermedium abgezogen wird.

Die wesentlichen Vorteile dieses Verfahrens können darin gesehen werden, dass zum einen das Filtertuch während der Montagephase durch die Schutzschicht hervorragend gegen mechanische Beschädigung geschützt ist und dass zum anderen durch einfaches Ablösen oder Abziehen der Schutzschicht, also durch wenige simple Handgriffe, ein arbeitsfertiger Zustand der Filtrationsvorrichtung rasch bereitgestellt werden kann.

Das Filtertuch in Sandwichstruktur kann gut handhabbar auch in grossen Flächen auf Filtermaschinen aufgelegt und mittels Einstemmkordeln oder anderen Einrichtungen an den dafür vorgesehenen Nuten auf herkömmliche Art verstemmt werden.

Nach dem Befestigungsvorgang wird die Schutzschicht abgezogen, wobei das perforierte Verhalten der Schutzschicht eine Entfernung unmittelbar beiderseits der Einstemmnuten erlaubt.

Bei einer bevorzugten Variante des Verfahrens wird das Filtertuch mittels Befestigungselementen, insbesondere Klemmelementen, an der Auflagefläche befestigt und im arbeitsfertigen Zustand verbleibt die Schutzschicht wenigstens teilweise in einem Bereich der Befestigungselemente am Filtermedium.

Hierdurch kann zum einen auch noch während des Betriebs ein Schutz vor mechanischer Beschädigung des Filtermediums aufrechterhalten werden. Zum anderen können durch das Verbleiben der Schutzschicht in der Umgebung der Klemmelemente, also durch ein Verdicken des Filtertuches in diesen Bereichen, eine Verbesserung der Dichteigenschaften des Filtertuchs bewirkt werden.

Weitere Vorteile und Eigenschaften des erfindungsgemäßen Filtertuchs und des erfindungsgemäßen Verfahrens werden nachstehend unter Bezugnahme auf die beigefügten schematischen Figuren beschrieben.

Dort zeigt:
- Fig. 1: eine schematische Querschnittsansicht eines mit Hilfe einer Einstemmnut und einer Einstemmkordel befestigten erfindungsgemäßen Filtertuchs und
- Fig. 2: eine schematische Teilquerschnittsansicht eines Segments einer Filtrationsvorrichtung mit einem montierten erfindungsgemäßen Filtertuch.

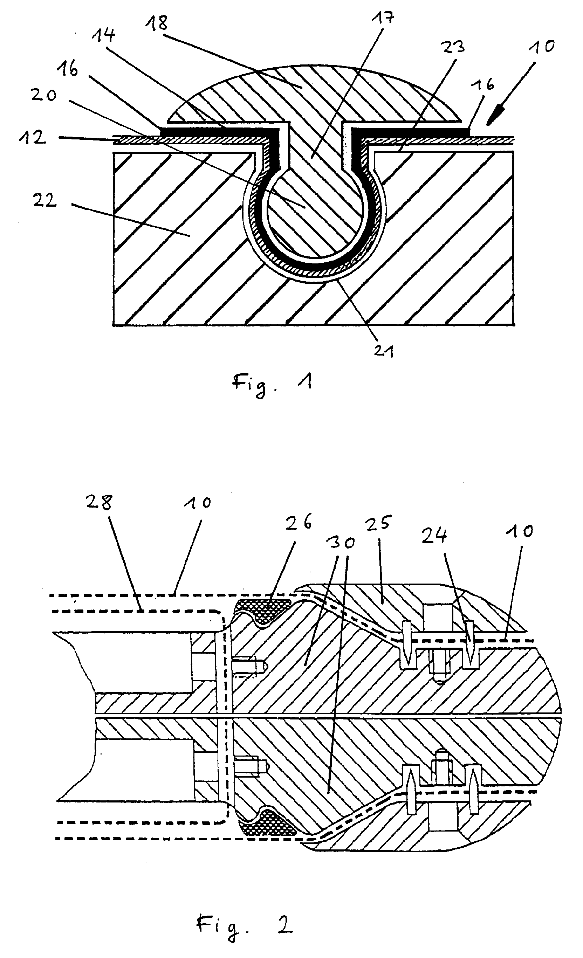

Figur 1 zeigt schematisch einen Querschnitt eines Segments 22 einer Filtrationsvorrichtung mit einem daran befestigten erfindungsgemäßen Filtertuchs 10.

Das Segment 22 weist eine Einstemmnut 21 auf, in welche eine Wulst 20 eines Einstemmprofiles 17, welche beispielsweise aus einem Kunststoff gefertigt sein kann, form- und kraftschlüssig eingreift. Zwischen Einstemmprofil 17 und Einstemmnut 21 ist dabei das erfindungsgemäße Filtertuch 10 mit Filtermedium 12 und darauf angebrachter Schutzschicht 14 eingeklemmt. Bei dieser Ausführung ist die Schutzschicht 14 nur auf die besonders empfindliche äußere Filterseite aufgebracht.

Figur 1 zeigt einen betriebsfertigen Zustand, bei dem zuvor die Schutzschicht 14 von dem Filtermedium 12 im Wesentlichen entlang von Perforationen 16 abgelöst oder abgezogen wurde. Im Bereich des Einstemmprofiles 17 und der Einstemmnut 21 ist aber noch ein Teil der Schutzschicht 14 mit dem Filtermedium 12 verbunden.

Das Einstemmprofil 17 weist im Querschnitt eine etwa pilzförmige Gestalt mit einem Hutabschnitt 18 und der Wulst 20 als Fuß auf. Das Filtertuch 10 ist von der Klemmung in der Einstemmnut 21 abgesehen außerdem zwischen dem Hutabschnitt 18 des Einstemmprofiles 17 und einer Auflagefläche 23 des Segments 22 eingeklemmt. Durch die erfindungsgemäße Ausbildung des Einstemmprofiles 17 mit pilzförmigem Querschnitt und insbesondere durch die breite und flächige Gestaltung des Hutabschnitts 18 kann ein weiterer Schutz des Filtertuchs 10 während der Montage, d.h. beim Einschlagen des Einstemmprofiles 17 in die Einstemmnut 21, erzielt werden.

Der im Bereich der Einstemmnut 21 verbliebene Teil der Schutzschicht 14 sorgt neben einem zusätzlichen Schutz vor mechanischem Abrieb durch das Einstemmprofil 17 außerdem für verbesserte Dichteigenschaften des Filtertuchs 10 in diesem Bereich.

Figur 2 zeigt in einer schematischen Teilquerschnittsansicht zwei aufeinandergelegte im Wesentlichen symmetrische Segmente 30 einer Filtrationsvorrichtung mit einem daran befestigten erfindungsgemäßen Filtertuch 10.

Die Befestigung erfolgt in dem gezeigten Beispiel mit Profilleisten 25, welche mit einer Mehrzahl von Nadeln 24 versehen sind.

Zum Schutz vor mechanischer Beanspruchung und Beschädigung sowie zur Verbesserung der Dichteigenschaften des Filtertuchs ist es auch hier zweckmäßig, wenn im Bereich der Profilleisten 25 eine hier nicht gezeigte Schutzschicht des Filtertuchs 10 auf dem Filtermedium verbleibt.

Die Abdichtung zu einem Innenbereich der Filtersegmente 30 wird außerdem durch eingelegte Dichtungen 26 verbessert. Weiterhin ist bei dem in Figur 2 gezeigten Beispiel zur mechanischen Stabilisierung des Filtertuchs 10 eine Stabilisierungslage 28, die auch als Stützgewebe bezeichnet werden kann und bei welcher es sich beispielsweise um ein relativ grobes Monofil-Gewebe handeln kann, vorgesehen.

## Patentansprüche

1. Filtertuch für eine Filtrationsvorrichtung mit einem Filtermedium (12), insbesondere einem Filtergewebe, welches zur Filtration eine Vielzahl von Öffnungen aufweist,
**dadurch gekennzeichnet,**
**dass** auf zumindest einer Seite des Filtermediums (12) zum Schutz vor mechanischer Beschädigung eine Schutzschicht (14) vorgesehen ist und
**dass** die Schutzschicht (14) lösbar auf das Filtermedium (12) aufgebracht ist.

2. Membranfiltertuch nach Anspruch 1,
**dadurch gekennzeichnet,**
**dass** die Schutzschicht (14) als eine Folie ausgebildet ist, welche auf das Filtermedium (12) aufgelegt und mit diesem verbunden ist.

3. Membranfiltertuch an einem der Ansprüche 1 oder 2,
**dadurch gekennzeichnet,**
**dass** die Schutzschicht (14) aus einem Material hoher Schlagfestigkeit ausgebildet ist.

4. Membranfiltertuch nach einem der Ansprüche 1 bis 3,
**dadurch gekennzeichnet,**
**dass** die Schutzschicht (14) eine richtungsveränderliche Festigkeit aufweist.

5. Membranfiltertuch nach Anspruch 4,
**dadurch gekennzeichnet,**
**dass** die Schutzschicht (14) in einer Längsrichtung eine hohe Festigkeit aufweist und in einer Querrichtung, insbesondere an einer Mehrzahl von ausgewählten Stellen, eine reduzierte Festigkeit, insbesondere Perforationen (16), aufweist.

6. Membranfiltertuch nach einem der Ansprüche 1 bis 5,
**dadurch gekennzeichnet,**
**dass** die Schutzschicht (14) rückstandsfrei von dem Filtermedium (12) abnehmbar, insbesondere abziehbar, ist.

7. Membranfiltertuch nach einem der Ansprüche 1 bis 6,
**dadurch gekennzeichnet,**
**dass** die Schutzschicht (14) mittels einer Klebebeschichtung auf das Filtermedium (12) aufgebracht ist.

8. Membranfiltertuch nach einem der Ansprüche 1 bis 6,
**dadurch gekennzeichnet,**
**dass** die Schutzschicht (14) aufgrund von elektrostatischen und/oder von Adhäsionskräften an dem Filtermedium (12) haftet.

9. Membranfiltertuch nach einem der Ansprüche 1 bis 8,
**dadurch gekennzeichnet,**
**dass** auf einer Rückseite des Filtermediums (12) ein Vliesmaterial aufgebracht ist, insbesondere aufkaschiert, ist.

10. Membranfiltertuch nach Anspruch 9,
**dadurch gekennzeichnet,**
**dass** als Vliesmaterial zur Verstärkung des Filtermediums (12) ein meltblown-Vlies, insbesondere aus einem synthetischen Polymer, auf das Filtermedium (12) aufgebracht ist.

11. Verfahren zur Montage eines Filtertuchs mit einem Filtermedium und einer darauf aufgebrachten Schutzschicht, insbesondere eines Filtertuchs nach einem der Ansprüche 1 bis 10,
**dadurch gekennzeichnet,**
**dass** das Filtertuch (10) auf eine Auflagefläche (23) einer Filtervorrichtung aufgelegt und befestigt wird und dass nach dem Befestigen zur Bereitsstellung eines arbeitsfertigen Zustands die Schutzschicht (14) zumindest teilweise von dem Filtermedium (12) gelöst wird.

12. Verfahren nach Anspruch 11,
**dadurch gekennzeichnet,**
**dass** das Filtertuch (10) mit Befestigungselementen (17; 24, 25), insbesondere Klemmelementen, an der Auflagefläche (23) befestigt wird und
**dass** im arbeitsfertigen Zustand die Schutzschicht (14) wenigstens teilweise in einem Bereich der Befestigungselemente (17; 24, 25) am Filtermedium (12) verbleibt.
